# EUROPÄISCHE PATENTSCHRIFT

(11) **EP 2 715 895 B1**
(45) Veröffentlichungstag und Bekanntmachung des Hinweises auf die Patenterteilung: **19.08.2015**
(21) Anmeldenummer: 12731297.3
(22) Anmeldetag: 25.05.2012
(51) Int. Cl.: H02G 15/013

(54) **DICHTUNGSELEMENT UND ANSCHLUSSGEHÄUSE MIT EINEM DICHTUNGSELEMENT**
SEALING ELEMENT AND CONNECTING HOUSING HAVING A SEALING ELEMENT
ÉLÉMENT D'ÉTANCHÉITÉ ET BOÎTIER DE CONNEXION DOTÉ D'UN ÉLÉMENT D'ÉTANCHÉITÉ

(30) Priorität: 27.05.2011 DE 102011103351
(43) Veröffentlichungstag der Anmeldung: 09.04.2014
(73) Patentinhaber: Phoenix Contact GmbH & Co. KG, 32825 Blomberg (DE)
(72) Erfinder: STARKE, Cord, 32825 Blomberg (DE); SCHÄFER, Sebastian, 32825 Blomberg (DE); REIMCHEN, Valeri, 32839 Steinheim/Sandebeck (DE); ENGEL Ansgar, 37696 Marienmünster (DE); LEINECKE Gerd, 31812 Bad Pyrmont (DE); SCHOLZ Sebastian, 37671 Höxter (DE)
(74) Vertreter: Janke, Christiane
(86) Internationale Anmeldenummer: PCT/EP2012/002247
(87) Internationale Veröffentlichungsnummer: WO 2012/163507

(56) Entgegenhaltungen:
- WO-A1-97/02637
- FR-A1- 2 940 534
- GB-A- 2 261 960
- JP-A- 2005 168 114
- US-A1- 2003 000 726

## Beschreibung

Die Erfindung richtet sich auf ein Dichtungselement zur Abdichtung eines in ein Anschlussgehäuse eingeführten Kabels mit einer Durchführungsöffnung zur Durchführung des Kabels, wobei das Dichtungselement scheibenförmig mit mindestens einer ersten in ihrem Umfang im Wesentlichen U-förmig ausgebildeten Scheibe und einer zweiten in ihrem Umfang im Wesentlichen U-förmig ausgebildeten, an der ersten Scheibe anliegenden Scheibe ausgebildet ist, wobei die erste Scheibe zwei sich gegenüberliegende Seitenflanken aufweist, welche parallel zueinander verlaufen, und wobei die erste Scheibe an ihrer die beiden Seitenflanken der ersten Scheibe miteinander verbindenden Oberseite eine Dichtungslippe aufweist. Ferner richtet sich die Erfindung auf ein Anschlussgehäuse zum Verbinden von Leitern von zwei oder mehr Kabeln.

Ein scheibenförmig ausgebildetes Dichtungselement nach dem Oberbegriff des Anspruchs 1 ist beispielsweise aus der WO 97/02637 A1 bekannt.

Um ein über eine Kabeleinführöffnung in ein Anschlussgehäuse eingeführtes Kabel abzudichten, ist es bekannt, ein im Wesentlichen ringförmig ausgebildetes Dichtungselement auf die Außenumfangsfläche des Kabels zu ziehen und das Kabel anschließend zusammen mit dem Dichtungselement in dem Gehäuse zu platzieren, wobei das Dichtungselement in der Kabeleinführöffnung des Anschlussgehäuses angeordnet wird, um den Innenraum des Anschlussgehäuses gegen Außeneinflüsse im Bereich der Einführöffnung des Kabels zu schützen. Zur weiteren Abdichtung kann der Innenraum des Anschlussgehäuses anschließend mit einer Dichtmasse bzw. einem Vergussmaterial ausgegossen oder ausgespritzt werden.

Ist das Anschlussgehäuse aus einem Gehäuseunterteil und einem Gehäuseoberteil ausgebildet, ist es üblicherweise vorgesehen, einen ersten Teilbereich der Kabeleinführöffnung in dem Gehäuseunterteil und einen zweiten Teilbereich der Kabeleinführöffnung in dem Gehäuseoberteil auszubilden, wobei das Dichtungselement hierbei aus zwei Teilen ausgebildet ist und der erste Teil in dem Gehäuseunterteil und der zweite Teil in dem Gehäuseunterteil fest angeordnet ist, bevor das Kabel eingeführt wird. Zum Anschließen eines Kabels wird dann das Kabel in das Gehäuseunterteil auf den ersten Teil des Dichtungselements gelegt. Anschließend wird das Gehäuseoberteil auf dem Gehäuseunterteil befestigt, so dass auch der zweite Teil des Dichtungselements an dem Kabel anliegt.

Beide mögliche Ausgestaltungen haben den Nachteil, dass eine sichere Abdichtung des Anschlussgehäuse und des darin angeschlossenen Kabels gegenüber von außen einwirkende Medien nicht gewährleistet werden kann.

Die vorliegende Erfindung hat sich daher zur Aufgabe gemacht, ein verbessertes Dichtungselement und ein verbessertes Anschlussgehäuse zur Verfügung zu stellen, mit welchem die Dichtwirkung deutlich verbessert werden kann.

Gemäß der Lehre der vorliegenden Erfindung wird die aufgezeigte Aufgabe bei einem Dichtungselement dadurch gelöst, dass die zweite Scheibe ein erstes Flankenpaar mit zwei sich gegenüberliegenden Seitenflanken aufweist, und dass die Dichtungslippe mit den Seitenflanken jeweils über einen abgeschrägten Verbindungsbereich verbunden ist.

Das Dichtungselement gemäß der Erfindung zeichnet sich dadurch gegenüber den bisher bekannten einteilig ausgebildeten Dichtungselementen, welche auf die Außenumfangsfläche des Kabels gezogen werden, bevor das Kabel in ein Anschlussgehäuse eingelegt wird, aus, dass das Dichtungselement nunmehr aus mehreren nebeneinander liegenden Scheiben ausgebildet ist. Das Dichtungselement ist in seiner längsseitigen Querschnittsfläche im Wesentlichen U-förmig ausgebildet, wobei im Wesentlichen mittig der Längsseitenfläche des Dichtungselements eine, vorzugsweise kreisringförmige, Durchführungsöffnung zur Durchführung des anzuschließenden Kabels, ausgebildet ist. Über diese Durchführungsöffnung kann das Dichtungselement in Form einer Presspassung auf den Außenumfang des Kabels gezogen werden, so dass der Außenumfang des Kabels im Bereich des Dichtungselements vollständig von dem Dichtungselement umschlossen ist.

Das Dichtungselement weist mindestens zwei Scheiben mit zwei sich jeweils gegenüberliegenden Seitenflanken auf, mit welchen das Dichtungselement im Bereich einer Kabeleinführungsöffnung eines Anschlussgehäuses an dem Anschlussgehäuse anliegt. Die beiden Seitenflanken der ersten Scheibe, mit welchen die erste Scheibe im Bereich der Kabeleinführöffnung an dem Anschlussgehäuse anliegt, verlaufen parallel zueinander. Die beiden Seitenflanken der zweiten Scheibe verlaufen hingegen konisch zueinander, so dass der Abstand der Seitenflanken der zweiten Scheibe hin zu der Oberseite des Dichtungselementes bzw. der Scheiben größer wird. Durch die konische Ausbildung der Seitenflanken der zweiten Scheibe stehen die Seitenflanken der zweiten Scheibe von den Seitenflanken der ersten Scheibe hervor und bilden gegenüber den Seitenflanken der ersten Scheibe eine rippenförmige Auswölbung aus, wodurch die Seitenflanken der zweiten Scheibe besonders dicht mittels einer Presspassung an dem Anschlussgehäuse anliegen. Vorzugsweise stehen die Seitenflanken der zweiten Scheibe sowohl an den Seitenbereichen als auch an der Unterseite des Dichtungselementes von den Seitenflanken der ersten Scheibe hervor und überragen diese. Im Bereich der Oberseite des Dichtungselementes hingegen überragt vorzugsweise die erste Scheibe die zweite Scheibe, indem die ersten Scheibe an ihrer die beiden Seitenflanken der ersten Scheibe miteinander verbindenden Oberseite eine Dichtungslippe aufweist, die mit den Seitenflanken jeweils über einen abgeschrägten Verbindungsbereich verbunden ist. Die Dichtungslippe ermöglicht eine besonders dichte Abdichtung zu dem Anschlussgehäuse im Bereich der Oberseite des Dichtungselementes. Die Dichtungslippe weist eine größere Breite auf als der Rest, insbesondere im Bereich der Seitenflanken, der ersten Scheibe, so dass insbesondere im Bereich der Oberseite des Dichtungselementes ein Spalt zwischen dem Dichtungselement und dem Anschlussgehäuse besonders wirkungsvoll verhindert werden kann. Der abgeschrägte Verbindungsbereich ist vorzugsweise konisch ausgebildet, wodurch eine über die Dichtungslippe auf das Dichtungselement wirkende Druckkraft durch eine Aufteilung der Druckkraft bei Einleitung in das Gehäuseunterteil besonders günstig in das Gehäuseunterteil eingeleitet.

Gemäß einer bevorzugten Ausgestaltung der Erfindung weist das Dichtungselement eine dritte in ihrem Umfang im Wesentlichen U-förmig ausgebildete Scheibe mit einer entsprechend der ersten Scheibe ausgestalteten Form auf, wobei die dritte Scheibe derart angeordnet ist, dass die zweite Scheibe zwischen der ersten Scheibe und der dritten Scheibe angeordnet ist. Die dritte Scheibe weist somit ebenso wie die erste Scheibe zwei sich gegenüberliegende Seitenflanken auf, welche parallel zueinander verlaufen, und weist an ihrer die beiden Seitenflanken der dritten Scheibe miteinander verbindenden Oberseite eine Dichtungslippe, die mit den Seitenflanken jeweils über einen abgeschrägten Verbindungsbereich verbunden ist, auf. Die dritte Scheibe ist somit im Wesentlichen identisch zu der ersten Scheibe ausgebildet. Dadurch, dass die dritte Scheibe derart angeordnet ist, dass die zweite Scheibe zwischen der ersten Scheibe und der dritten Scheibe angeordnet ist, ist die zweite Scheibe von zwei im Wesentlichen baugleichen Scheiben eingerahmt. Das Dichtungselement weist dadurch eine Achssymmetrie auf, die es ermöglicht, das Dichtungselement über zwei Seiten in ein Anschlussgehäuse einzusetzen, was den Einbau des Dichtungselementes in einem Anschlussgehäuse erleichtert und Montagefehler verhindert.

Um die Abdichtungswirkung der zweiten Scheibe zu erhöhen, welche vorzugsweise mittig in einem Dichtungselement angeordnet ist, ist es bevorzugt vorgesehen, dass die zweite Scheibe zusätzlich zu dem ersten Flankenpaar ein zweites Flankenpaar mit zwei sich gegenüberliegenden Seitenflanken aufweist, welche konisch zueinander ausgebildet sind. Das zweite Flankenpaar ist vorzugsweise entsprechend der Form des ersten Flankenpaares der zweiten Scheibe ausgebildet, so dass das zweite Flankenpaar ebenso wie das erste Flankenpaar eine im Bereich der Seitenbereiche und der Unterseite des Dichtungselementes ausgebildete rippenförmige Auswölbung bildet. Durch die zwei rippenförmigen Auswölbungen, welche parallel zueinander verlaufen, kann die Dichtwirkung der zweiten , Scheibe hin zu dem Anschlussgehäuse wesentlich verbessert werden.

Vorzugsweise ist es ferner vorgesehen, dass die zweite Scheibe an ihrer die Seitenflanken miteinander verbindenden Oberseite eine eben ausgebildete Fläche aufweist. Die ebene Fläche grenzt an die Dichtungslippe der ersten Scheibe und der dritten Scheibe an, wobei die ebene Fläche tiefer liegt als die Dichtungslippen, so dass die ebene Fläche, welche zwischen den beiden Dichtungslippen ausgebildet ist, von den beiden Dichtungslippen überragt wird. Im Bereich der Oberseite des Dichtungselementes ist somit das Dichtungselement vorzugsweise in seiner Mitte flacher ausgebildet als an seinen Seitenkantenbereichen. Auch durch diese mögliche erfindungsgemäße Ausgestaltung des Dichtungselementes kann die Dichtwirkung des Dichtungselements weiter verbessert werden.

Gemäß der Lehre der vorliegenden Erfindung wird die oben aufgezeigte Aufgabe für ein Anschlussgehäuse zum Verbinden von Leitern von zwei oder mehr Kabeln dadurch gelöst, dass das Anschlussgehäuse mindestens eine Kabeleinführöffnung, ein Gehäuseunterteil und ein Gehäuseoberteil aufweist, wobei ein erster Teilbereich der Kabeleinführöffnung in dem Gehäuseunterteil und ein zweiter Teilbereich der Kabeleinführöffnung in dem Gehäuseoberteil ausgebildet ist, wobei das Gehäuseunterteil eine im Wesentlichen umlaufende, einen Innenraum ausbildende Rippe aufweist, die im Bereich der Kabeleinführöffnung eine Aussparung aufweist, wobei in der Kabeleinführöffnung in der Aussparung der Rippe ein eine Durchführungsöffnung für ein anzuschließendes Kabel aufweisendes, einteilig ausgebildetes Dichtungselement angeordnet, welches nach einem der Ansprüche 1 bis 4 ausgebildet ist, wobei der durch die Rippe ausgebildete Innenraum mit einem Vergussmaterial gefüllt ist, und wobei im Bereich der Rippe zwischen dem Gehäuseunterteil und dem Gehäuseoberteil ein Flachdichtungselement angeordnet ist.

Die Abdichtung des erfindungsgemäßen Anschlussgehäuses erfolgt somit im Gegensatz zu den bisher bekannten Anschlussgehäusen mittels einer an dem Gehäuseunterteil des Anschlussgehäuses ausgebildeten Rippe, einem im Bereich eines durch die Rippe ausgebildeten Innenraumes eingefüllten Vergussmaterials, insbesondere einer gummiartigen Kunststoffmasse, einem zwischen der Rippe des Gehäuseunterteils und dem Gehäuseoberteils angeordneten Flachdichtungselementes und einem im Bereich der Kabeleinführöffnung angeordneten, einteilig ausgebildeten Dichtungselementes. Durch die Kombination dieser verschiedenen Abdichtungselemente kann eine besonders wirkungsvolle Abdichtung des Anschlussgehäuses erreicht werden. Das Anschlussgehäuse ist hierbei zweiteilig, aus einem Gehäuseoberteil und einem Gehäuseunterteil ausgebildet. Das Dichtungselement im Bereich der Kabeleinführöffnung ist nicht bereits an dem Gehäuseunterteil und dem Gehäuseoberteil in Form einer zweiteiligen Ausbildung fest angeformt, sondern ist ein einteilig ausgebildetes, separates Bauteil, welches vor der Anordnung in dem Anschlussgehäuse zunächst mittels einer Presspassung über den Außenumfang des anzuschließenden Kabels gezogen wird und anschließend zusammen mit dem Kabel zunächst in die in dem Gehäuseunterteil ausgebildete Kabeleinführöffnung eingelegt wird. Hierdurch ist eine besonders sichere Abdichtung insbesondere im Bereich zwischen Kabel, Dichtungselement und Anschlussgehäuse möglich. Die Aufnahme des Dichtungselementes in dem Anschlussgehäuse im Bereich der Kabeleinführöffnung ist dabei derart gestaltet, dass das Dichtungselement sowohl axial zum Kabel als auch radial zum Kabel verpresst wird. Mittels des Flachdichtungselementes erfolgt eine sichere Abdichtung zum Gehäuseoberteil hin.

Nach einer bevorzugten Ausgestaltung des Anschlussgehäuses ist das Flachdichtungselement derart ausgebildet, dass das Flachdichtungselement das Dichtungselement zumindest teilweise überlappt. Hierdurch ist ein direkter Kontakt zwischen dem Dichtungselement und dem Flachdichtungselement ermöglicht, wobei der Kontakt im Bereich der Oberseite des Dichtungselementes, welches an das Gehäuseoberteil angrenzt, erfolgt. Hierdurch ist eine besonders sichere Abdichtung des Kabels bzw. des Dichtungselementes zum Gehäuseoberteil hin möglich, was insbesondere bei zweiteilig ausgebildeten Anschlussgehäusen üblicherweise eine große Schwachstelle darstellt.

Das in dem Anschlussgehäuse verwendete Dichtungselement ist besonders bevorzugt ein wie vorstehend aus- und weitergebildetes Dichtungselement, welches scheibenförmig mit mindestens einer ersten in ihrem Umgang im Wesentlichen U-förmig ausgebildeten Scheibe und einer zweiten in ihrem Umfang im Wesentlichen U-förmig ausgebildeten, an der ersten Scheibe anliegenden, Scheibe ausgebildet ist, wobei die erste Scheibe zwei sich gegenüberliegende Seitenflanken aufweist, welche parallel zueinander verlaufen, und die zweite Scheibe ein erstes Flankenpaar mit zwei sich gegenüberliegenden Seitenflanken aufweist, welche konisch zueinander ausgebildet sind, wobei die erste Scheibe an ihrer die beiden Seitenflanken der ersten Scheibe miteinander verbindenden Oberseite eine Dichtungslippe aufweist, die mit den Seitenflanken jeweils über einen abgeschrägten Verbindungsbereich verbunden ist. Das Dichtungselement kann dabei eine dritte in ihrem Umfang im Wesentlichen U-förmig ausgebildete Scheibe mit einer entsprechend der ersten Scheibe ausgestalteten Form aufweisen, wobei die dritte Scheibe derart angeordnet istm dass die zweite Scheibe zwischen der ersten Scheibe und der dritten Scheibe angeordnet ist. Ferner kann die zweite Scheibe ein zweites Flankenpaar mit zwei sich gegenüberliegenden Seitenflanken aufweisen, welche konisch zueinander ausgebildet sind. Weiter kann die zweite Scheibe an ihrer die Seitenflanken miteinander verbindenden Oberseite eine eben ausgebildete Oberfläche aufweisen. Ein derartig ausgebildetes Dichtungselement ermöglicht eine besonders sichere Abdichtung sowohl zum Kabel als auch zum Anschlussgehäuse hin, wodurch ein unerwünschtes Eindringen von Medien in das Anschlussgehäuse besonders wirkungsvoll verhindert werden kann.

Um die Abdichtung zwischen dem Gehäuseoberteil und dem Gehäuseunterteil im Bereich der Kabeleinführöffnung besonders sicher ausgestalten zu können, ist es bevorzugt vorgesehen, dass ein Bereich der Rippe, welcher an die Kabeleinführöffnung angrenzt, einen abgeschrägten Kantenbereich aufweist. Der abgeschrägte Kantenbereich ist vorzugsweise an die Dichtungslippe bzw. den abgeschrägten Verbindungsbereich der ersten Scheibe des Dichtungselementes angepasst, so dass die Dichtungslippe passgenau im Bereich des abgeschrägten Kantenbereiches die Rippe überdeckt und damit die Kabeleinführöffnung zum Gehäuseoberteil hin überlappt und besonders wirkungsvoll abdichten kann.

Ferner ist es vorzugsweise vorgesehen, dass die Rippe im Bereich der Kabeleinführöffnung eine Verzweigung aufweist, wodurch in dem kritischen Bereich, an dem das Gehäuseunterteil, das Gehäuseoberteil und das Dichtungselement aufeinandertreffen eine Redundanz erreicht wird. Die Verzweigung der Rippe ist vorzugsweise an beiden Enden der Rippe, wo die Rippe eine Aussparung aufweist und an die Kabeleinführöffnung angrenzt, ausgebildet, wobei die Verzweigung jeweils vorzugsweise in Form eines ersten Rippenarmes und eines zweiten Rippenarmes ausgebildet ist, wobei der erste Rippenarm an eine Seitenflanke der ersten Scheibe und der zweite Rippenarm an eine Seitenflanke der dritten Scheibe mittels einer Presspassung angrenzt, so dass in diesen Bereichen eine zusätzliche sichere Abdichtung erfolgen kann.

Gemäß einer weiter bevorzugten Ausgestaltung des Anschlussgehäuses weist das Gehäuseunterteil an einem an die Kabeleinführöffnung angrenzenden Bereich eine Ausbuchtung auf. Die Ausbuchtung ist in dem Gehäuseunterteil unterhalb des angeschlossenen Kabels ausgebildet und ermöglicht, dass das in den Innenraum des Anschlussgehäuses eingebrachte Vergussmaterial sich auch ausreichend unterhalb des Kabels zwischen dem Kabel und dem Gehäuseunterteil ausbilden kann, um auch in diesem Bereich eine verbesserte Abdichtung zu erreichen.

Es gibt nun eine Vielzahl von Möglichkeiten, das erfindungsgemäße Dichtungselement und das erfindungsgemäße Anschlussgehäuse auszugestalten und weiterzuentwickeln. Hierzu wird verwiesen einerseits auf die den Patentansprüchen 1 und 5 nachfolgenden Patentansprüche sowie auf die Beschreibung von Ausführungsbeispielen in Verbindung mit der Zeichnung. Die Zeichnung zeigt in
- Fig. 1: eine schematische perspektivische Darstellung eines Dichtungselementes gemäß der Erfindung,
- Fig. 2: eine schematische Darstellung des in Fig. 1 gezeigten Dichtungselementes gemäß der Erfindung in einer Draufsicht auf eine Längsseite des Dichtungselementes,
- Fig. 3: eine schematische Darstellung des in Fig. 1 gezeigten Dichtungselementes gemäß der Erfindung in einer Draufsicht auf eine Querseite des Dichtungselementes,
- Fig. 4: eine schematische Darstellung eines Gehäuseunterteils eines Anschlussgehäuses gemäß der Erfindung mit zwei in das Gehäuseunterteil eingeführten Kabeln und zwei im Bereich der Kabeleinführöffnungen des Gehäuseunterteils angeordneten Dichtungselementen, welche gemäß dem in Fig. 1 gezeigten erfindungsgemäßen Dichtungselement ausgebildet ist,
- Fig. 5: eine schematische Detaildarstellung des in Fig. 4 gezeigten Gehäuseunterteils gemäß der Erfindung,
- Fig. 6: eine schematische Darstellung eines Flachdichtungselementes gemäß der Erfindung in einer perspektivischen Ansicht,
- Fig. 7: eine schematische Darstellung eines Gehäuseoberteils eines Anschlussgehäuses gemäß der Erfindung, und
- Fig. 8: eine schematische Schnittdarstellung entlang der Querseite des Anschlussgehäuses gemäß der Erfindung im Bereich der Kabeleinführöffnung.

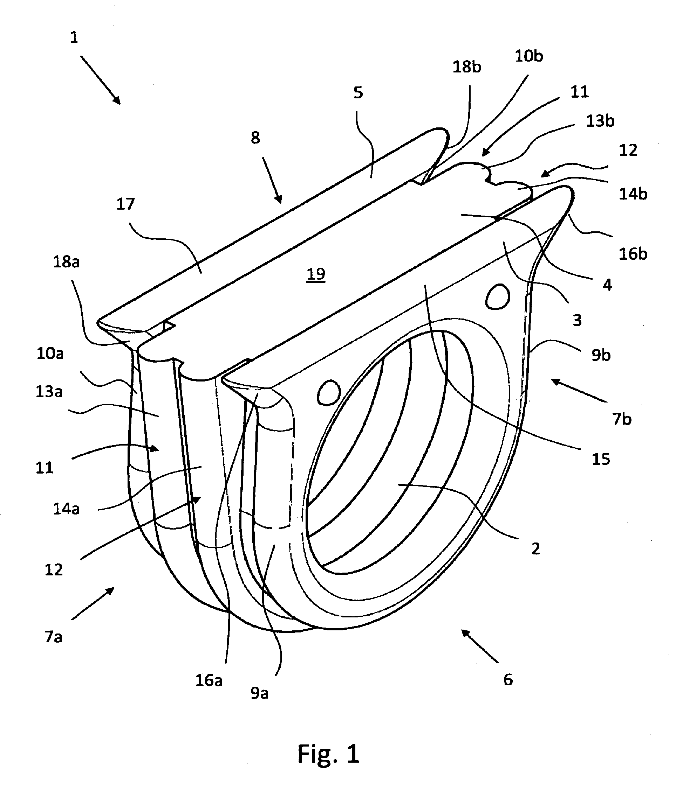

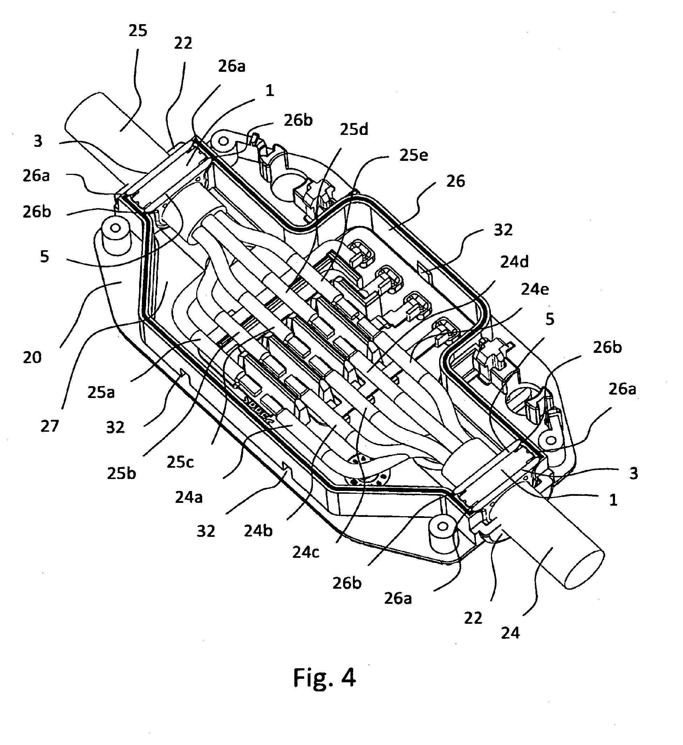

In Fig. 1, Fig. 2 und Fig. 3 wird das erfindungsgemäße Dichtungselement 1 gemäß einer bevorzugten Ausführungsform in verschiedenen Ansichten gezeigt. Das Dichtungselement 1, welches aus einem elastischen Kunststoff hergestellt ist, dient zur Abdichtung eines in ein Anschlussgehäuse eingeführten Kabels, wie es beispielsweise in Fig. 4 gezeigt ist. Das Dichtungselement 1 ist als ein einteiliges Bauteil ausgebildet und weist eine Durchführungsöffnung 2 zur Durchführung eines in den Fig. 1 - 3 nicht gezeigten Kabels auf. Das Dichtungselement 1 ist scheibenförmig ausgebildet und weist bei der hier gezeigten Ausführungsform drei aneinander angrenzende, stoffschlüssig miteinander verbundene, in ihrem Umfang im Wesentlichen U-förmig ausgebildete Scheiben 3, 4, 5 auf. Durch die U-förmige Ausbildung der Scheiben 3, 4, 5 ist das gesamte Dichtungselement 1 in seiner Form im Wesentlichen U-förmig ausgebildet. Dabei weist das Dichtungselement 1 eine Unterseite 6, zwei Seitenbereiche 7a, 7b und eine Oberseite 8 auf. Im Bereich der Unterseite 6 ist das Dichtungselement 1 und damit auch die Scheiben 3, 4, 5 im Wesentlichen halbkreisförmig ausgebildet. Im Bereich der Oberseite 8 ist das Dichtungselement 1 und damit auch die Scheiben 3, 4, 5 im Wesentlichen gerade ausgebildet. Die Form der Seitenbereiche 7a, 7b des Dichtungselementes 1 wird durch die einzelnen Scheiben 3, 4, 5 des Dichtungselementes bestimmt. Die Scheiben 3, 4, 5 selber sind im Bereich der Unterseite 6 und der Seitenbereiche 7a, 7b des Dichtungselementes 1 entlang ihrer Umrandung bzw. ihres Randbereiches abgerundet ausgebildet.

Die erste Scheibe 3 und die dritte Scheibe 5 sind im Wesentlichen in ihrer Form gleich ausgebildet. Die erste Scheibe 3 weist im Bereich der Seitenbereiche 7a, 7b des Dichtungselementes 1 zwei sich gegenüberliegende Seitenflanken 9a, 9b auf, welche parallel zueinander verlaufen, so dass sich deren Abstand im Bereich der Seitenbereiche 7a, 7b im Wesentlichen nicht verändert. Die dritte Scheibe 5 weist im Bereich der Seitenbereiche 7a, 7b des Dichtungselementes 1 ebenfalls zwei sich gegenüberliegende Seitenflanken 10a, 10b auf, welche parallel zueinander verlaufen, so dass sich deren Abstand im Bereich der Seitenbereiche 7a, 7b im Wesentlichen nicht verändert.

Die zweite Scheibe 4 ist zwischen der ersten Scheibe 3 und der dritten Scheibe 5 angeordnet und weist bei der hier gezeigten Ausführungsform ein erstes Flankenpaar 11 und ein zweites Flankenpaar 12 auf, welche parallel zueinander angeordnet sind. Das erste Flankenpaar 11 weist zwei sich gegenüberliegende Seitenflanken 13a, 13b auf, welche konisch zueinander ausgebildet sind, d. h. dass sich der Abstand der gegenüberliegenden Seitenflanken 13a, 13b von der Unterseite 6 des Dichtungselementes 1 hin zu der Oberseite 8 des Dichtungselementes 1 vergrößert. Das zweite Flankenpaar 12 weist ebenfalls zwei sich gegenüberliegende Seitenflanken 14a, 14b auf, welche konisch zueinander ausgebildet sind. Durch die konische Ausbildung der Seitenflanken 13a, 13b, 14a, 14b der zweiten Scheibe 4 stehen die Seitenflanken 13a, 13b, 14a, 14b der zweiten Scheibe 4 von den Seitenflanken 9a, 9b der ersten Scheibe 3 und den Seitenflanken 10a, 10b der dritten Scheibe 5 hervor und bilden gegenüber den Seitenflanken 9a, 9b der ersten Scheibe 3 und der Seitenflanken 10a, 10b eine rippenförmige Auswölbung aus. Dabei stehen die Seitenflanken 13a, 13b, 14a, 14b der zweiten Scheibe 4 sowohl an den Seitenbereichen 7a, 7b als auch an der Unterseite 6 des Dichtungselements 1 von den Seitenflanken 9a, 9b der ersten Scheibe 3 und den Seitenflanken 10a, 10b der dritten Scheibe 5 hervor und überragen diese. Dadurch ist eine rippenförmige Auswölbung der Seitenflanken 13a, 13b, 14a, 14b der zweiten Scheibe 4 des Dichtungselementes über den gesamten Bereich der Seitenbereiche 7a, 7b und der Unterseite 6 des Dichtungselementes 1 ausgebildet.

An der Oberseite 8 des Dichtungselementes 1 weist die erste Scheibe 3 eine Dichtungslippe 15 auf, die mit den Seitenflanken 9a, 9b der ersten Scheibe 3 jeweils über einen abgeschrägten Verbindungsbereich 16a, 16b verbunden ist. Die Dichtungslippe 15 weist eine größere Länge auf als der Abstand zwischen den beiden Seitenflanken 9a, 9b ausgebildet ist, so dass die beiden abgeschrägten Verbindungsbereiche 16a, 16b ausgehend von den Seitenflanken 9a, 9b in Richtung der Dichtungslippe 15 konisch ausgebildet sind, d. h. dass sich der Abstand der abgeschrägten Verbindungsbereiche 16a, 16b hin zu der Dichtungslippe 15 vergrößert.

Die dritte Scheibe 5 weist ebenfalls an der Oberseite 8 des Dichtungselementes 1 eine Dichtungslippe 17 auf, die mit den Seitenflanken 10a, 10b der dritten Scheibe 5 jeweils über einen abgeschrägten Verbindungsbereich 18a, 18b verbunden ist. Die Dichtungslippe 17 weist eine größere Länge auf als der Abstand zwischen den beiden Seitenflanken 10a, 10b ausgebildet ist, so dass die beiden abgeschrägten Verbindungsbereiche 18a, 18b ausgehend von den Seitenflanken 10a, 10b in Richtung der Dichtungslippe 17 konisch ausgebildet sind, d. h. dass sich der Abstand der abgeschrägten Verbindungsbereiche 18a, 18b hin zu der Dichtungslippe 17 vergrößert.

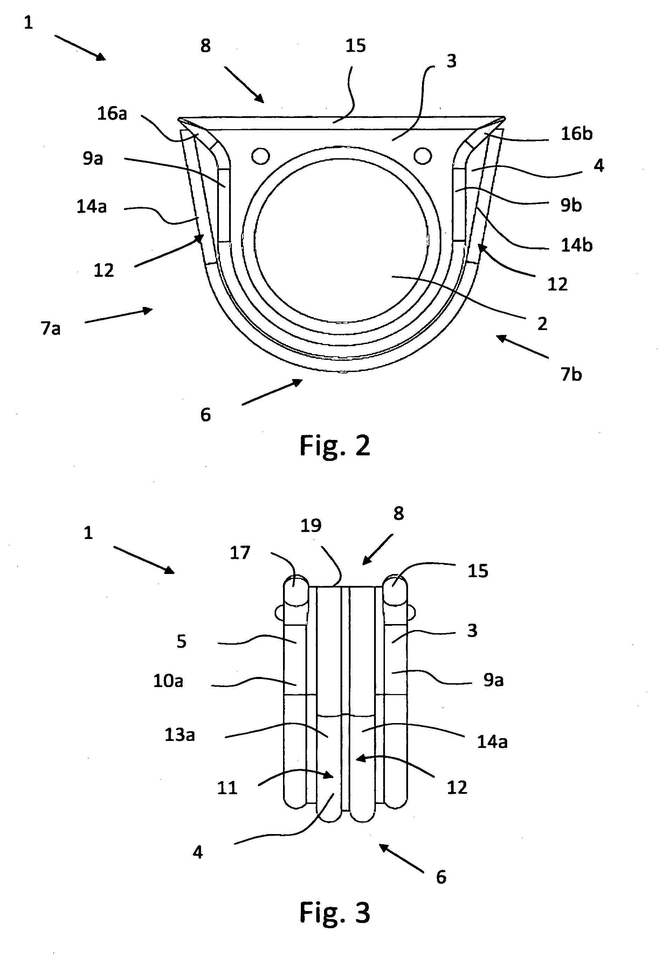

Die zweite Scheibe 4 ist im Bereich der Oberseite 8 des Dichtungselementes flach bzw. eben ausgebildet. Diese ebene Fläche 19 der zweiten Scheibe 4 grenzt an die Dichtungslippe 15 der ersten Scheibe 3 und an die Dichtungslippe 17 der dritten Scheibe 5 an, wobei die ebene Fläche 19 der zweiten Scheibe 4 tiefer liegt als die Dichtungslippen 15, 17, was insbesondere in Fig. 3 zu erkennen ist, so dass die ebene Fläche 19, welche zwischen den beiden Dichtungslippen 15, 17 ausgebildet ist, von den beiden Dichtungslippen 15, 17 überragt wird.

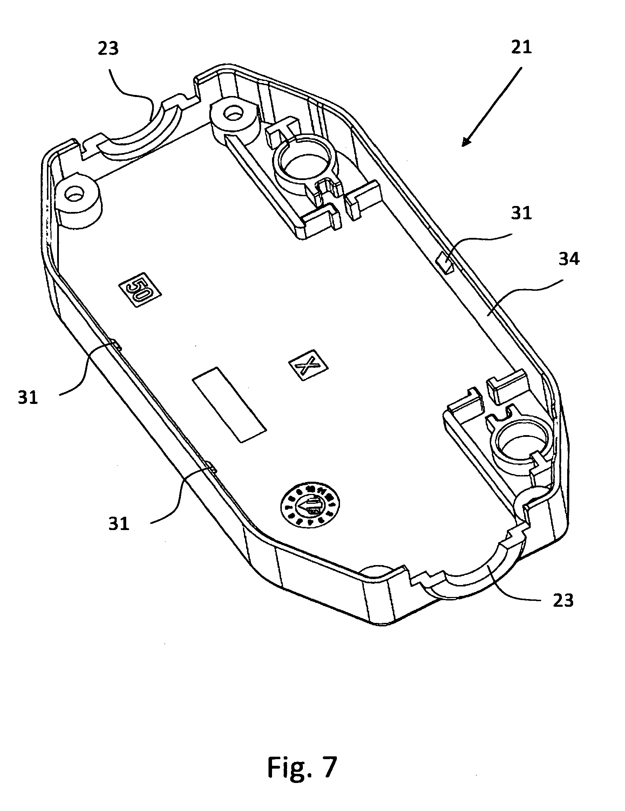

In Fig. 4 ist ein Gehäuseunterteil 20 eines Anschlussgehäuses gemäß einer möglichen Ausführungsform der Erfindung gezeigt, in welchem ein wie zuvor beschriebenes Dichtungselement 1 angeordnet werden kann. In Fig. 7 ist ein Gehäuseoberteil 21 gezeigt, welches zur Ausbildung des Anschlussgehäuses mit dem Gehäuseunterteil 20 verbunden werden kann. Das Anschlussgehäuse weist bei der hier gezeigten Ausführungsform zwei Kabeleinführöffnungen auf, welche jeweils geteilt ausgebildet sind, wobei jeweils ein erster Teilbereich 22 der Kabeleinführöffnung in dem Gehäuseunterteil 20 und ein zweiter Teilbereich 23 in dem Gehäuseoberteil 21 ausgebildet ist. Über die Kabeleinführöffnungen ist jeweils ein Kabel 24, 25 in das Anschlussgehäuse eingeführt.

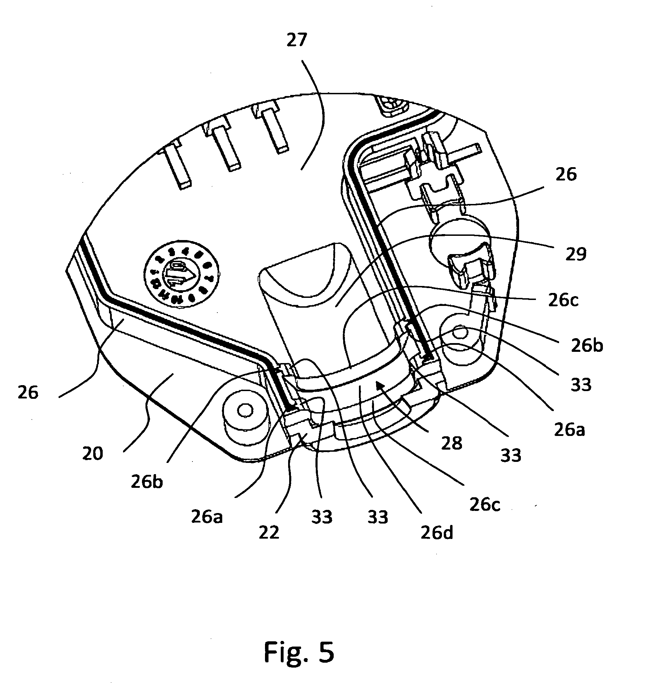

Das Gehäuseunterteil 20 weist eine im Wesentlichen umlaufende Rippe 26 auf, welche die Begrenzung eines Innenraumes 27 des Anschlussgehäuses ausbildet, in welchem eine Kontaktierung der einzelnen Leiter 24a - 24e, 25a - 25e der Kabel 24, 25 erfolgt. Die Rippe 26 kann hierbei einstückig an dem Gehäuseunterteil 20, aus dem gleichen Material wie das Gehäuseunterteil 20 ausgebildet sein. Im Bereich der Kabeleinführöffnungen ist der Verlauf der Rippe 26 unterbrochen, so dass die Rippe 26 eine Aussparung 28 aufweist, wie dies insbesondere in Fig. 5 gezeigt ist. Das Dichtungselement 1 ist derart in der Kabeleinführöffnung angeordnet, dass die Seitenflanken 9a, 9b, 10a, 10b, 13a, 13b, 14a, 14b der einzelnen Scheiben 3, 4, 5 des Dichtungselementes 1 an der Rippe 26 anliegen. Im Bereich der zwei Kabeleinführöffnungen weist die Rippe 26 jeweils angrenzend zu der Aussparung 28 eine Verzweigung auf. Die Verzweigung ist jeweils in Form eines ersten Rippenarmes 26a und eines zweiten Rippenarmes 26b ausgebildet ist, wobei der erste Rippenarm 26a an eine Seitenflanke 9a, 9b der ersten Scheibe 3 und der zweite Rippenarm 26b an eine Seitenflanke 10a, 10b der dritten Scheibe 5 angrenzt. Wie in Fig. 5 gezeigt ist, überspannen die Rippenarme 26a, 26b die Aussparung 28 mittels jeweils einer entlang der Umfangsfläche der Aussparung ausgebildeten Auswölbung 26c, auf welchen das Dichtungselement 1 mit seiner Unterseite 6, insbesondere der durch die erste Scheibe 3 und die dritte Scheibe 5 aufliegen. Zwischen den Auswölbungen 26c ist eine Vertiefung 26d ausgebildet, in welcher die rippenförmigen Auswölbungen der zwei Flankenpaare 11, 12 der zweiten Scheibe 4 aufliegen.

Nach dem Positionieren der Kabel 24, 25 mit den daran angeordneten Dichtungselementen 1 in dem Gehäuseunterteil 20 und dem Anschluss der Leiter 24a - 24e, 25a - 25e an in dem Anschlussgehäuse, insbesondere dem Gehäuseunterteil 20 des Anschlussgehäuses, ausgebildeten Kontakten wird ein hier nicht gezeigtes Vergussmaterial in den durch die Rippe 26 begrenzten Innenraum 27 eingespritzt oder eingegossen, so dass sich das Vergussmaterial in dem gesamten Innenraum verteilt und diesen vollständig ausfüllt. Das Vergussmaterial ist vorzugsweise ein Kunststoffspritzgussmaterial.

Damit das Vergussmaterial auch das in das Anschlussgehäuse eingeführte Kabel 24, 25 vollständig umschließen kann, weist das Gehäuseunterteil 20 an einem an die Kabeleinführöffnung angrenzenden Bereich eine Ausbuchtung 29 auf, wie dies insbesondere in Fig. 5 zu erkennen ist. Die Ausbuchtung 29 ist vorzugsweise in Form einer Vertiefung oder Auswölbung in dem Gehäuseunterteil 20 ausgebildet und erstreckt sich von der Aussparung 28 der Rippe 26 bzw. der Anordnung des Dichtungselementes 1 in der Aussparung 28 bis zu der Stelle in dem Innenraum 27 des Anschlussgehäuses, ab wo das Kabel 24, 25 abisoliert ist und die einzelnen Leiter 24a- 24e, 25a - 25e des Kabels 24, 25 frei liegen, wie dies in Fig. 4 gezeigt ist.

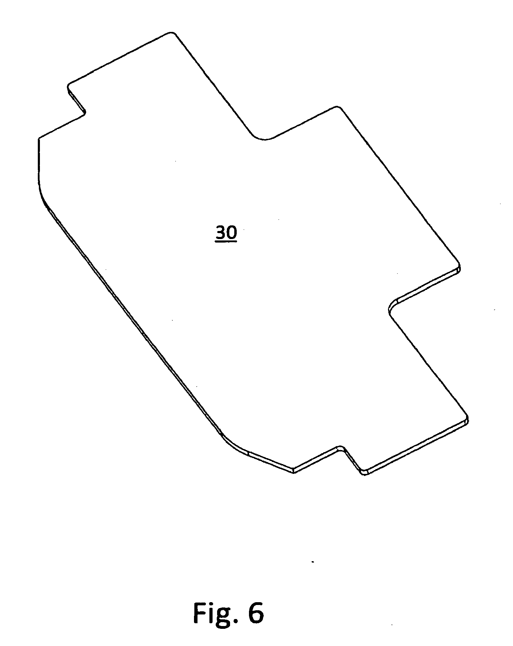

Nach dem Einspritzen des Vergussmaterials in den Innenraum 27 wird ein wie in Fig. 6 gezeigtes Flachdichtungselement 30 derart auf das Gehäuseunterteil 20 aufgelegt, dass das Flachdichtungselement 30 auf der Rippe 26 und zumindest teilweise auf den Dichtungselementen 1 aufliegt. Die Kontur des Flachdichtungselementes 30 ist dabei mittels eines Stanzprozesses an die Form der Rippe 26 derart angepasst, dass es die Rippe 26 vollständig überdeckt. Das Flachdichtungselement 30 ist vorzugsweise in Form einer dünnen Gummimatte ausgebildet. Bei der in Fig. 6 gezeigten Ausführungsform ist das Flachdichtungselement 30 vollflächig ausgebildet. Es ist aber auch möglich, dass das Flachdichtungselement 30 im Bereich des Innenraumes 27 des Gehäuseunterteils 20 eine Aussparung aufweist, so dass das Flachdichtungselement 30 den Innenraum 27 nicht vollständig überlappt.

Zum Verschließen des Anschlussgehäuses wird zum Schluss ein Gehäuseoberteil 21, wie es in Fig. 7 gezeigt ist, auf das Gehäuseunterteil 20 aufgesetzt und vorzugsweise mittels Verrastelementen 31, welche in an der Rippe 26 ausgebildeten Ausnehmungen 32, wie sie in Fig. 4 zu erkennen sind, eingreifen können, und zusätzlichen Schrauben, hier nicht gezeigt, welche im Bereich der Kabeleinführöffnung befestigt werden, fixiert. Zur Vereinfachung der Montage, kann das Flachdichtungselement 30 auf der in Richtung Gehäuseunterteil 20 zeigenden Innenfläche des Gehäuseoberteils 21 befestigt, insbesondere durch eine Klebverbindung aufgeklebt, sein. Im befestigten bzw. zusammengefügten Zustand liegt der Rand 34 des Gehäuseoberteils 21 an der Außenseite der Rippe 26, welche von dem Innenraum 27 des Gehäuseunterteils weg zeigt, dicht an.

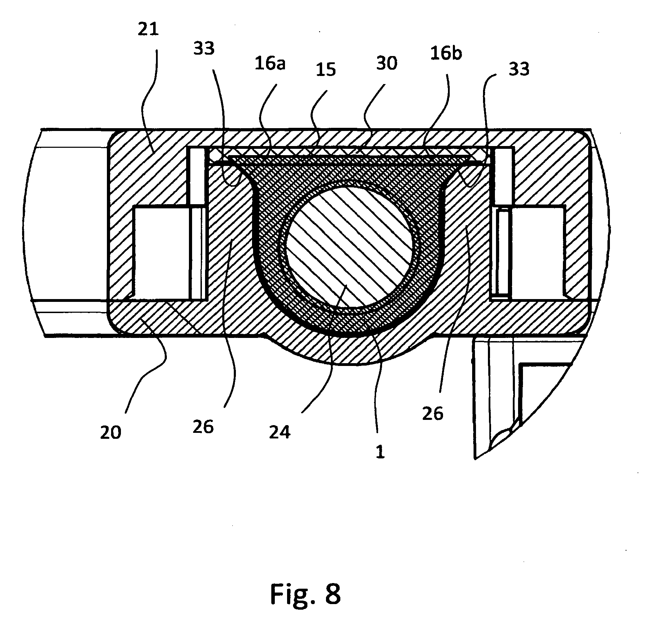

In Fig. 8 ist eine Schnittdarstellung durch ein fertig montiertes Anschlussgehäuse gezeigt, bei welchem ein mit einem Dichtungselement 1 versehenes Kabel 24, 25 in einer Kabeleinführöffnung des Anschlussgehäuses angeordnet ist und zwischen dem Gehäuseunterteil 20, bzw. der Rippe 26 des Gehäuseunterteils 20, und dem Gehäuseoberteil 21 ein Flachdichtungselement 30 aufliegt, welches die Oberseite 8 des Dichtungselementes 1 überdeckt. Im Bereich des Dichtungselements 1 liegt das Flachdichtungselement 30 auf den Dichtungslippen 15, 17 der ersten Scheibe 3 und der dritten Scheibe 5 besonders dicht auf. Ferner ist hier zu erkennen, dass ein Bereich der Rippe 26, welcher an die Kabeleinführöffnung angrenzt, einen abgeschrägten Kantenbereich 33 aufweist. Wie insbesondere in Fig. 5 zu erkennen ist, ist der abgeschrägte Kantenbereich 33 jeweils an den freien Enden der Rippenarme 26a, 26b, welche an die Seitenflanken 9a, 9b, 10a, 10b der ersten Scheibe 3 und der dritten Scheibe 5 angrenzen, ausgebildet. Hierdurch wird das Fügen des Dichtungselementes 1 in die Aussparung 28 der Rippe 26 im Bereich der Kabeleinführöffnung erleichtert. Das Anschlussgehäuse gemäß der Erfindung kann vorzugsweise als ein sogenanntes Solar-Anschlussgehäuse für Solarstecker eingesetzt bzw. verwendet werden.

### Bezugszeichenliste

- Dichtungselement: 1
- Durchführungsöffnung: 2
- Erste Scheibe: 3
- Zweite Scheibe: 4
- Dritte Scheibe: 5
- Unterseite: 6
- Seitenbereich: 7a, 7b
- Oberseite: 8
- Seitenflanke: 9a, 9b
- Seitenflanke: 10a, 10b
- Erstes Flankenpaar: 11
- Zweites Flankenpaar: 12
- Seitenflanke: 13a, 13b
- Seitenflanke: 14a, 14b
- Dichtungslippe: 15
- Abgeschrägter Verbindungsbereich: 16a, 16b
- Dichtungslippe: 17
- Abgeschrägter Verbindungsbereich: 18a, 18b
- Ebene Fläche: 19
- Gehäuseunterteil: 20
- Gehäuseoberteil: 21
- Erster Teilbereich der Kabeleinführöffnung: 22
- Zweiter Teilbereich der Kabeleinführöffnung: 23
- Kabel: 24
- Leiter: 24a - 24e
- Kabel: 25
- Leiter: 25a - 25e
- Rippe: 26
- Rippenarm: 26a, 26b
- Auswölbung: 26c
- Vertiefung: 26d
- Innenraum: 27
- Aussparung: 28
- Ausbuchtung: 29
- Flachdichtungselement: 30
- Verrastelement: 31
- Ausnehmung: 32
- Abgeschrägter Kantenbreich: 33
- Rand: 34

## Patentansprüche

1. Dichtungselement (1) zur Abdichtung eines in ein Anschlussgehäuse eingeführten Kabels (24, 25), mit einer Durchführungsöffnung (2) zur Durchführung des Kabels (24, 25),
wobei das Dichtungselement (1) scheibenförmig mit mindestens einer ersten in ihrem Umfang im Wesentlichen U-förmig ausgebildeten Scheibe (3) und einer zweiten in ihrem Umfang im Wesentlichen U-förmig ausgebildeten, an der ersten Scheibe (3) anliegenden, Scheibe (4) ausgebildet ist,
wobei die erste Scheibe (3) zwei sich gegenüberliegende Seitenflanken (9a, 9b) aufweist, welche parallel zueinander verlaufen, und wobei die erste Scheibe (3) an ihrer die beiden Seitenflanken (9a, 9b) der ersten Scheibe (3) miteinander verbindenden Oberseite eine Dichtungslippe (15) aufweist,
**dadurch gekennzeichnet, dass**
die zweite Scheibe (4) ein erstes Flankenpaar (11) mit zwei sich gegenüberliegenden Seitenflanken (13a, 13b) aufweist, welche konisch zueinander ausgebildet sind, und dass die Dichtungslippe (15) mit den Seitenflanken (9a, 9b) jeweils über einen abgeschrägten Verbindungsbereich (16a, 16b) verbunden ist.

2. Dichtungselement (1) nach Anspruch 1, **dadurch gekennzeichnet, dass** das Dichtungselement (1) eine dritte in ihrem Umfang im Wesentlichen U-förmig ausgebildete Scheibe (5) mit einer entsprechend der ersten Scheibe (3) ausgestalteten Form aufweist, wobei die dritte Scheibe (5) derart angeordnet ist, dass die zweite Scheibe (4) zwischen der ersten Scheibe (3) und der dritten Scheibe (5) angeordnet ist.

3. Dichtungselement (1) nach Anspruch 1 oder 2, **dadurch gekennzeichnet, dass** die zweite Scheibe (4) ein zweites Flankenpaar (12) mit zwei sich gegenüberliegenden Seitenflanken (14a, 14b) aufweist, welche konisch zueinander ausgebildet sind.

4. Dichtungselement (1) nach einem der Ansprüche 1 bis 3, **dadurch gekennzeichnet, dass** die zweite Scheibe (4) an ihrer die Seitenflanken (14a, 14b) miteinander verbindenden Oberseite eine eben ausgebildete Fläche (19) aufweist.

5. Anschlussgehäuse zum Verbinden von Leitern (24a - 24e, 25a - 25e) von zwei oder mehr Kabeln (24, 25),
mit mindestens einer Kabeleinführöffnung,
einem Gehäuseunterteil (20) und
einem Gehäuseoberteil (21),
wobei ein erster Teilbereich (22) der Kabeleinführöffnung in dem Gehäuseunterteil (20) und ein zweiter Teilbereich (23) der Kabeleinführöffnung in dem Gehäuseoberteil (21) ausgebildet ist,
wobei das Gehäuseunterteil (20) eine im Wesentlichen umlaufende, einen Innenraum (27) ausbildende Rippe (26) aufweist, die im Bereich der Kabeleinführöffnung eine Aussparung (28) aufweist,
wobei in der Kabeleinführöffnung in der Aussparung (28) der Rippe (26) ein eine Durchführungsöffnung (2) für ein anzuschließendes Kabel (24, 25) aufweisendes, einteilig ausgebildetes Dichtungselement (1) angeordnet ist, welches nach einem der Ansprüche 1 bis 4 ausgebildet ist,
wobei der durch die Rippe (26) ausgebildete Innenraum (27) mit einem Vergussmaterial gefüllt ist, und
wobei im Bereich der Rippe (26) zwischen dem Gehäuseunterteil (20) und dem Gehäuseoberteil (21) ein Flachdichtungselement (30) angeordnet ist.

6. Anschlussgehäuse nach Anspruch 5, **dadurch gekennzeichnet, dass** das Flachdichtungselement (30) das Dichtungselement (1) zumindest teilweise überlappt.

7. Anschlussgehäuse nach Anspruch 5 oder 6, **dadurch gekennzeichnet, dass** ein Bereich der Rippe (26), welcher an die Kabeleinführöffnung angrenzt, einen abgeschrägten Kantenbereich (33) aufweist.

8. Anschlussgehäuse nach einem der Ansprüche 5 bis 7, **dadurch gekennzeichnet, dass** die Rippe (26) im Bereich der Kabeleinführöffnung eine Verzweigung aufweist.

9. Anschlussgehäuse nach einem der Ansprüche 5 bis 8, **dadurch gekennzeichnet, dass** das Gehäuseunterteil (20) an einem an die Kabeleinführöffnung angrenzenden Bereich eine Ausbuchtung (29) aufweist.

## Claims

1. A sealing element (1) for sealing a cable (24, 25) inserted into a terminal housing, featuring a passage opening (2) for passing through the cable (24, 25),
wherein the sealing element (1) is realized in a disk-shaped fashion with at least one first disk (3) that has an essentially U-shaped circumference and a second disk (4) that has an essentially U-shaped circumference and rests against the first disk (3),
wherein the first disk (3) has two opposing lateral flanks (9a, 9b) that extend parallel to one another, and wherein the first disk (3) has a sealing lip (15) on its upper side that connects the two lateral flanks (9a, 9b) of the first disk (3) to one another,
**characterized in that**
the second disk (4) has a first pair of flanks (11) with two opposing lateral flanks (13a, 13b) that are realized conically with respect to one another, and **in that** the sealing lip (15) is respectively connected to the lateral flanks (9a, 9b) by means of a chamfered connecting region (16a, 16b).

2. The sealing element (1) according to Claim 1, **characterized in that** the sealing element (1) features a third disk (5) that has an essentially U-shaped circumference and is realized with a shape corresponding to that of the first disk (3), wherein the third disk (5) is arranged in such a way that the second disk (4) is arranged between the first disk (3) and the third disk (5).

3. The sealing element (1) according to Claim 1 or 2, **characterized in that** the second disk (4) has a second pair of flanks (12) with two opposing lateral flanks (14a, 14b) that are realized conically with respect to one another.

4. The sealing element (1) according to one of Claims 1-3, **characterized in that** the second disk (4) has a plane surface (19) on its upper side that connects the lateral flanks (14a, 14b) to one another.

5. A terminal housing for connecting conductors (24a-24e, 25a-25e) of two or more cables (24, 25),
featuring at least one cable insertion opening,
a lower housing part (20) and
an upper housing part (21),
wherein a first section (22) of the cable insertion opening is realized in the lower housing part (20) and a second section (23) of the cable insertion opening is realized in the upper housing part (21),
wherein the lower housing part (20) has an essentially peripheral rib (26) that forms an interior (27) and features a recess (28) in the region of the cable insertion opening,
wherein a one-piece sealing element (1), which is realized in accordance with one of Claims 1-4 and features a passage opening (2) for a cable (24, 25) to be connected, is arranged in the cable insertion opening in the recess (28) of the rib (26),
wherein the interior (27) formed by the rib (26) is filled with a sealing compound, and
wherein a flat sealing element (30) is arranged between the lower housing part (20) and the upper housing part (21) in the region of the rib (26).

6. The terminal housing according to Claim 5, **characterized in that** the flat sealing element (30) at least partially overlaps the sealing element (1).

7. The terminal housing according to Claim 5 or 6, **characterized in that** a region of the rib (26) bordering on the cable insertion opening has a chamfered edge region (33).

8. The terminal housing according to one of Claims 5-7, **characterized in that** the rib (26) has a branching in the region of the cable insertion opening.

9. The terminal housing according to one of Claims 5-8, **characterized in that** the lower housing part (20) has a bulge (29) in a region bordering on the cable insertion opening.

## Revendications

1. Elément d'étanchéité (1) pour l'isolation d'un câble (24, 25) introduit dans un boîtier de raccordement, comportant un orifice de passage (2) pour faire passer le câble (24, 25),
l'élément d'étanchéité (1) étant réalisé en forme de plaque avec au moins une première plaque (3) réalisée sensiblement en forme de U sur sa circonférence et une deuxième plaque (4) réalisée sensiblement en forme de U sur sa circonférence et reposant sur la première plaque (3),
la première plaque (3) présentant deux flancs latéraux (9a, 9b) se faisant face qui s'étendent parallèlement l'un à l'autre et la première plaque (3) présentant une lèvre d'étanchéité (15) sur sa face supérieure reliant entre eux les deux flancs latéraux (9a, 9b) de la première plaque (3),
**caractérisé en ce que**
la deuxième plaque (4) présente une première paire de flancs (11) avec deux flancs latéraux (13a, 13b) se faisant face qui sont réalisés en cône l'un par rapport à l'autre et que la lèvre d'étanchéité (15) est reliée aux flancs latéraux (9a, 9b) respectivement par une zone de liaison biseautée (16a, 16b).

2. Elément d'étanchéité (1) selon la revendication 1, **caractérisé en ce que** l'élément d'étanchéité (1) présente une troisième plaque (5) réalisée sensiblement en forme de U sur sa circonférence et ayant une forme adaptée à celle de la première plaque (3), la troisième plaque (5) étant réalisée de manière à ce que la deuxième plaque (4) soit disposée entre la première plaque (3) et la troisième plaque (5).

3. Elément d'étanchéité (1) selon la revendication 1 ou 2, **caractérisé en ce que** la deuxième plaque (4) présente une seconde paire de flancs (12) avec deux flancs latéraux (14a, 14b) se faisant face qui sont réalisés en cône l'un par rapport à l'autre.

4. Elément d'étanchéité (1) selon une des revendications 1 à 3, **caractérisé en ce que** la deuxième plaque (4) présente une surface (19) à conformation plane sur sa face supérieure reliant les flancs latéraux (14a, 14b) entre eux.

5. Boîtier de raccordement pour le raccordement de conducteurs (24a - 24e, 25a - 25e) de deux ou plusieurs câbles (24, 25), comportant au moins
un orifice d'introduction de câble et
une partie inférieure de boîtier (20),
une partie supérieure de boîtier (21),
une première sous-partie (22) de l'orifice d'introduction de câble étant réalisée dans la partie inférieure du boîtier (20) et une seconde sous-partie (23) de l'orifice d'introduction de câble dans la partie supérieure du boîtier (21),
la partie inférieure du boîtier (20) présentant une nervure (26) sensiblement périphérique constituant un compartiment intérieur (27) et qui présente un évidement (28) au niveau de l'orifice d'introduction de câble,
étant disposé dans l'orifice d'introduction de câble, dans l'évidement (28) de la nervure (26), un élément d'étanchéité (1) monobloc présentant un orifice de passage (2) pour un câble à raccorder (24, 25) et qui est réalisé selon une des revendications 1 à 4,
le compartiment intérieur (27) formé par la nervure (26) étant rempli d'un matériau coulé et
un élément d'étanchéité plat (30) étant disposé au niveau de la nervure (26) entre la partie inférieure du boîtier (20) et la partie supérieure du boîtier (21).

6. Boîtier de raccordement selon la revendication 5, **caractérisé en ce que** l'élément d'étanchéité plat (30) chevauche au moins partiellement l'élément d'étanchéité (1).

7. Boîtier de raccordement selon la revendication 5 ou 6, **caractérisé en ce qu'**une partie de la nervure (26) qui jouxte l'orifice d'introduction de câble présente une périphérie biseautée (33).

8. Boîtier de raccordement selon une des revendications 5 à 7, **caractérisé en ce que** la nervure (26) présente une bifurcation au niveau de l'orifice d'introduction de câble.

9. Boîtier de raccordement selon une des revendications 5 à 8, **caractérisé en ce que** la partie inférieure du boîtier (20) présente un bombement (29) dans une zone jouxtant l'orifice d'introduction de câble.
